# EUROPEAN PATENT APPLICATION

(11) **EP 4 020 138 A1**
(43) Date of publication of application: **29.06.2022**
(21) Application number: 21216005.5
(22) Date of filing: 20.12.2021
(51) Int. Cl.: G06F 3/01, G05B 19/042, G05B 23/02, G06F 3/03, G06F 3/04842, G06V 20/20, G08B 25/00

(54) **APPARATUS, METHOD, PROGRAM AND RECORDING MEDIUM FOR OBJECT DETECTION AND MANAGEMENT OF ASSOCIATED HISTORICAL DATA**

(30) Priority: 28.12.2020 JP 2020219165
(71) Applicant: YOKOGAWA ELECTRIC CORPORATION, Musashino-shi Tokyo 180-8750 (JP)
(72) Inventor: AKISADA, Yukiyo, Tokyo, 180-8750 (JP); SAKURAI, Yasuki, Tokyo, 180-8750 (JP)
(74) Representative: Zinkler, Franz

(57) **Abstract**

There is provided an apparatus including a detection unit configured to detect an object viewed by a subject, a storage unit configured to store historical data of the object viewed by the subject in association with each of a plurality of situations having occurred in a scene in response to the occurrence of the situation, and an output unit configured to output, when any of the plurality of situations has occurred, information for identifying the object associated with the situation in the historical data.

## Description

### BACKGROUND

### 1. TECHNICAL FIELD

The present invention relates to an apparatus, a method, a program and a recording medium.

### 2. RELATED ART

Patent document 1 describes: "An electronic device includes a line of sight detection unit configured to detect a line of sight of a user, and a control unit may acquire an area in a website which has gained attention of the user based on line of sight information of the user which is acquired from the line of sight detection unit".

Patent document 1: Japanese Unexamined Patent Application, Publication No. 2015-191551.

### SUMMARY

To address the above-described issue, according to a first aspect of the present invention, there is provided an apparatus. The apparatus may include a detection unit configured to detect an object viewed by a subject. The apparatus may include a storage unit configured to store historical data of the object viewed by the subject in association with each of a plurality of situations having occurred in a scene in response to the occurrence of the situation. The apparatus may include an output unit configured to output, when any of the plurality of situations has occurred, information for identifying the object associated with the situation in the historical data.

The detection unit may detect an object viewed by one subject, and the output unit may output information to another subject.

The storage unit may store a plurality of objects together with a detection order by the detection unit. The output unit may sequentially output the information of the plurality of objects following the detection order by the detection unit.

The apparatus may include a second detection unit configured to detect a change of a situation in the scene. The second detection unit may detect the change of the situation in the scene in response to at least one of an operation performed on a device that is the object, and a change of a measurement value by a sensor beyond a threshold.

The output unit may output the information for identifying the object by at least one of causing a display device mounted to the subject to display the information for identifying the object, increasing a luminance of a display screen of the device that is the object, and presenting the device that is the object by a sound.

The output unit may output information for identifying a location of the object.

According to a second aspect of the present invention, there is provided a method. The method may include detecting an object viewed by a subject. The method may include storing historical data of the object viewed by the subject in association with each of a plurality of situations having occurred in a scene in response to the occurrence of the situation. The method may include outputting, when any of the plurality of situations has occurred, information for identifying the object associated with the situation in the historical data.

According to a third aspect of the present invention, there is provided a program. The program may cause a computer to function as a detection unit configured to detect an object viewed by a subject. The program may cause the computer to function as a storage unit configured to store historical data of the object viewed by the subject in association with each of a plurality of situations having occurred in a scene in response to the occurrence of the situation. The program may cause the computer to function as an output unit configured to output, when any of the plurality of situations has occurred, information for identifying the object associated with the situation in the historical data.

The summary clause does not necessarily describe all necessary features of the embodiments of the present invention. The present invention may also be a sub-combination of the features described above.

### BRIEF DESCRIPTION OF THE DRAWINGS

Fig. 1 illustrates a maintenance and management system 1 according to the present embodiment.
Fig. 2 illustrates an output apparatus 17.
Fig. 3 illustrates an operation of the output apparatus 17.
Fig. 4 illustrates another operation of the output apparatus 17.
Fig. 5 illustrates a display screen.
Fig. 6 illustrates an example of a computer 2200 in which a plurality of aspects of the present invention may be entirely or partially embodied.

### DESCRIPTION OF EXEMPLARY EMBODIMENTS

Hereinafter, the present invention will be described by way of embodiments of the invention, but the following embodiments are not intended to restrict the invention according to the claims. In addition, not all combinations of features described in the embodiments necessarily have to be essential to solving means of the invention.

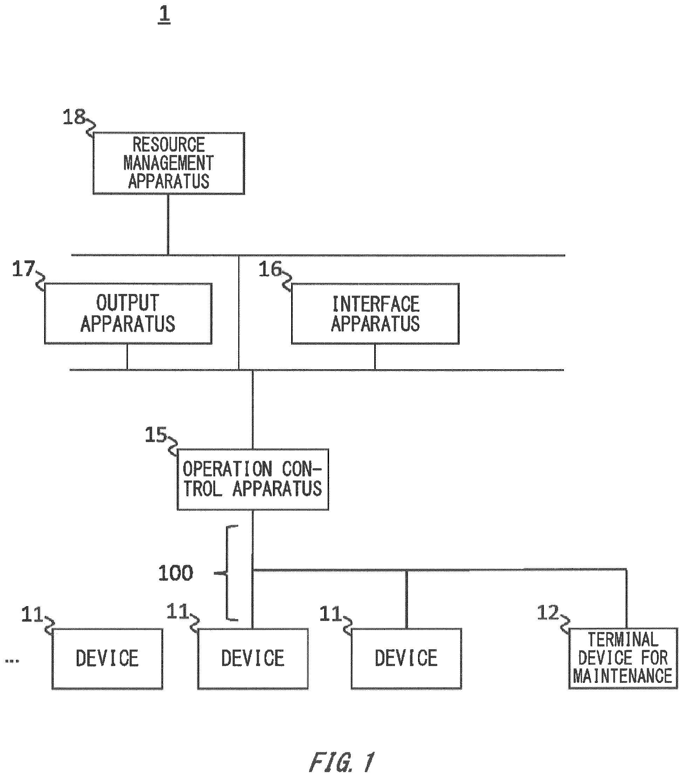

Fig. 1 illustrates a maintenance and management system 1 according to the present embodiment. The maintenance and management system 1 is configured to perform maintenance and management of a plant, and includes a plurality of devices 11, a terminal device 12 for maintenance, an operation control apparatus 15, an interface apparatus 16, an output apparatus 17, and a resource management apparatus 18.

Herein, examples of the plant include not only an industrial plant such as a chemical plant but also a plant that manages and controls a well source such as a gas field or an oil field and its surrounding area, a plant that manages and controls power generation such as hydroelectric, thermal, or nuclear power generation, a plant that manages and controls environmental power generation such as solar or wind power generation, a plant that manages and controls water and sewerage, a dam, or the like, and other plants. A part of the plurality of devices 11 and the terminal device 12 for maintenance may be arranged in a site where a process is executed in the plant. For example, a pipe through which a fluid to be measured flows, a flowmeter installed in the pipe and configured to measure a mass flow rate of the fluid, and the like are present in the site. The operation control apparatus 15, another part of the plurality of devices 11, the interface apparatus 16, the output apparatus 17, and the resource management apparatus 18 may be arranged in a management center of the plant.

The plurality of devices 11 is equipment, machinery, or an apparatus, and may be, for example, a sensor configured to measure a physical quantity such as a pressure, a temperature, a pH, a speed, or a mass flow rate in the process of the plant, may be an actuator such as a valve, a mass flow rate control valve, an on-off valve, a pump, a fan, a motor, a heating apparatus, or a cooling apparatus configured to control any of physical quantities, may be an audio device such as a microphone or a speaker configured to collect an abnormal sound or the like in the plant or emit a warning sound or the like, may be a location detection device configured to output location information of each device, may be a pipe through which a fluid flows, may be a switch, a camera, or a personal computer (PC) arranged in a room of the management center or the like, or may be other devices. The respective devices 11 among the plurality of devices 11 may be mutually different types, or at least a part of two or more of the devices 11 may be the same type.

At least some of the plurality of devices 11 may be connected to the operation control apparatus 15 in a wired or wireless manner via a control network 100. A communication in the control network 100 may be a digital communication or may be a hybrid communication in which a digital signal is superimposed on an analog signal (signal at 4 to 20 mA or the like), and a speed may be approximately from 1000 bps to 10000 bps (as one example, 1200 bps, or 2400 bps). The communication in the control network 100 may be performed, for example, by a wireless communication protocol of International Society of Automation (ISA), and as one example, the communication may be performed by ISA100, Highway Addressable Remote Transducer (HART) (registered trademark), BRAIN (registered trademark), FOUNDATION Fieldbus, PROFIBUS, or the like.

Each of the devices 11 may have unique identification information (also referred to as device unique information). The device unique information is information for uniquely identifying the device 11, and may be, according to the present embodiment, as one example, at least one of a serial number assigned to the device 11 by a communication protocol (as one example, HART), a serial number set by a manufacturer of the device 11, and a device ID assigned by a user.

The terminal device 12 for maintenance is configured to access a setting parameter of some of the plurality of devices 11, and refer to, set, and change a value of the setting parameter, or the like. The terminal device 12 for maintenance may be a handheld terminal (HHT) held by a subject in the site (as one example, a smartphone or a tablet PC), or a stationary type PC. When the terminal device 12 for maintenance is a handheld terminal, the terminal device 12 for maintenance may be detachably connected to the device 11.

The operation control apparatus 15 is configured to communicate with some of the plurality of devices 11 and control the process. For example, the operation control apparatus 15 is configured to acquire a process value that is measurement data from the device 11 serving as a sensor, and drive the device 11 serving as an actuator. Then, the operation control apparatus 15 may supply the process value to the interface apparatus 16, and receive a target value of the process value from the interface apparatus 16. It should be noted that according to the present embodiment, as one example, descriptions have been provided where the maintenance and management system 1 includes the single operation control apparatus 15 to control the plurality of devices 11, but the maintenance and management system 1 may include a plurality of the operation control apparatuses 15 which are configured to respectively control parts of the devices 11 in a distributed manner. As one example, the operation control apparatus 15 may be a field control station (FCS).

The interface apparatus 16 is configured to display various types of data in the plant on a display screen, and provide an interface between the subject and the plant. The interface apparatus 16 may control the process of the plant via the operation control apparatus 15 in response to an operation by the subject. For example, the interface apparatus 16 may receive the process value from the operation control apparatus 15, and supply the target value of the process value to the operation control apparatus 15. In addition, the interface apparatus 16 may change the value of the setting parameter of the device 11 via the operation control apparatus 15. In addition, the interface apparatus 16 may store, in association with at least a part of the devices 11, the value of the setting parameter of the device 11. The interface apparatus 16 may be a human interface station (HIS) as one example, and may be configured by a PC or the like.

The output apparatus 17 is one example of an apparatus, and is configured to output various types of information to the subject in each of situations in the plant. For example, the output apparatus 17 may present, to the subject, an object to be viewed in each of the situation. The output apparatus 17 may be configured by a wearable device, a PC, a camera, or the like as one example. The output apparatus 17 is communicably connected to the devices 11, the resource management apparatus 18, the interface apparatus 16, the operation control apparatus 15, the terminal device 12 for maintenance of the plant, and the like (hereinafter, also referred to as an external apparatus) according to the present embodiment, but a configuration may also be adopted where the output apparatus 17 is not connected to the external apparatus.

The resource management apparatus 18 is configured to perform online monitoring and centralized management of the plant. For example, the resource management apparatus 18 may manage the data (as one example, the value of the setting parameter or the process value) of the device 11 which is acquired by the operation control apparatus 15, or the like. The resource management apparatus 18 may be configured by a PC or the like as one example.

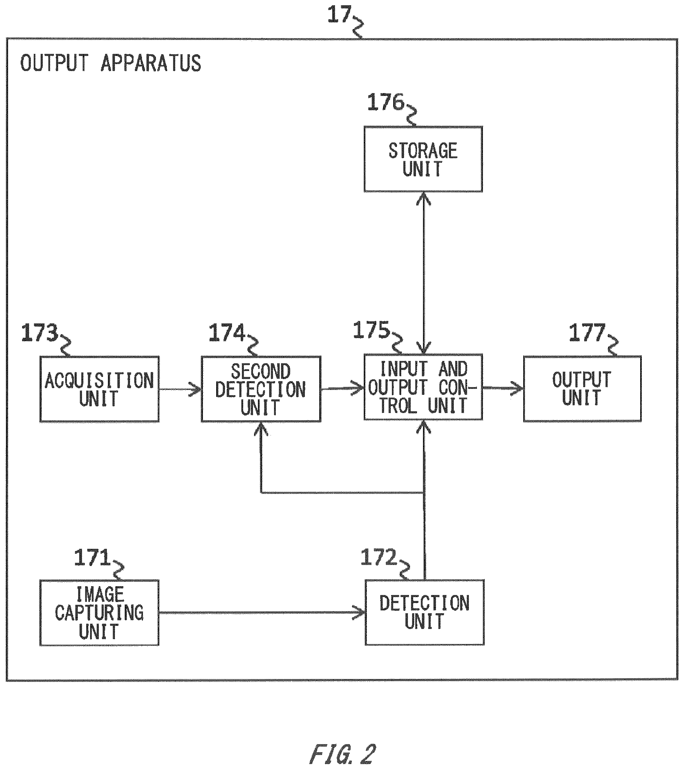

Fig. 2 illustrates the output apparatus 17. The output apparatus 17 stores an object that has been viewed by the subject in a storage mode, and presents, to the subject, an object to be viewed in an output mode. The output apparatus 17 has an image capturing unit 171, a detection unit 172, an acquisition unit 173, a second detection unit 174, an input and output control unit 175, a storage unit 176, and an output unit 177.

The image capturing unit 171 is configured to capture the subject for detecting a line of sight of the subject. The image capturing unit 171 captures a part (such as the eyeballs or head) of the subject. The image capturing unit 171 may be a spectacle type wearable device, a camera provided in an outer circumferential part of a display screen of the output apparatus 17 or the external apparatus, a monitoring camera provided to a ceiling or a wall of the management center or the like, or other devices. The image capturing unit 171 may supply the captured data to the detection unit 172.

The detection unit 172 is configured to detect the object viewed by the subject. The detection unit 172 may detect the line of sight by analyzing an image supplied from the image capturing unit 171. The detection unit 172 may detect a gaze location of eyes from an image of eyeballs, and detect a straight line connecting an intermediate point of the eyes and the gaze location of the subject as the line of sight of the subject. The detection unit 172 may detect an orientation of the head of the subject from locations of the eyes, nose, mouth, and the like of the subject, and detect a straight line of the detected orientation as the line of sight of the subject. The detection unit 172 may detect an area or the device 11 on the detected line of sight as the object. The detection unit 172 may detect the object as a coordinate range, and in this case, the detection unit 172 may have a table illustrating a correspondence relationship between the coordinate range and the device 11. The detection unit 172 may further detect a location of the subject from Global Positioning System (GPS) or an image, and detect the object from the location and the line of sight of the subject. The detection unit 172 may supply data indicating the object to the input and output control unit 175 and the second detection unit 174.

The acquisition unit 173 is configured to acquire an input related to a situation in the plant from the subject or the external apparatus. The acquisition unit 173 may receive various types of data in a wired or wireless manner from the external apparatus present in the plant. The acquisition unit 173 may include at least one of a keyboard, a touch panel, a communication terminal device, a button, and the like. The acquisition unit 173 may supply acquired contents to the second detection unit 174.

Herein, the situation may include at least one of exit/entry of the subject from a building such as the management center or a room, the time reaching a predetermined clock time, work performed by the subject in the plant (as one example, a predetermined operation on the external apparatus), detection of an abnormality of the process value of the device 11 in the plant, and the like.

The second detection unit 174 is configured to detect a change or occurrence of the situation in the scene from the acquired contents from the acquisition unit 173. The second detection unit 174 may detect the change of the situation in the scene in response to at least one of an operation performed on the external apparatus that is the object (as one example, the interface apparatus 16 or the like) and a change of a measurement value by the external apparatus (as one example, the device 11 such as a sensor) beyond a threshold.The second detection unit 174 may detect the object viewed by the subject by using the data from the detection unit 172, and detect the change of the situation in response to a determination that the subject has viewed a specific object. The second detection unit 174 may further detect a change of the scene. With regard to each of the situations, the second detection unit 174 may store a condition (as one example, a threshold, a range, or the like) for determining the change or occurrence of the situation. The second detection unit 174 may supply data indicating the detected change or occurrence of the situation to the input and output control unit 175.

Herein, the scene may be a predetermined space in the plant, and as one example, may be at least one of a range where the image capturing can be performed by the image capturing unit 171, a building, a room, or a work space in the plant, an installation area of one or a plurality of the devices 11, and a display screen of the output apparatus 17 or the external apparatus.

The input and output control unit 175 is configured to control input and output of data to be stored in the storage unit 176. In the storage mode, the input and output control unit 175 may store, in the storage unit 176, the object viewed by the subject (as one example, a coordinate range viewed by the subject, the device 11 viewed by the subject, or the like) in association with the situation. The input and output control unit 175 may determine the object to be stored from the data indicating the object which is supplied from the detection unit 172. The input and output control unit 175 may determine a current situation from the data supplied from the second detection unit 174.

In the output mode, the input and output control unit 175 may acquire the information for identifying the object associated with the situation from the storage unit 176, and supply the information to the output unit 177. The input and output control unit 175 may perform switching between the storage mode and the output mode in accordance with a mode input by the subject via the acquisition unit 173.

Herein, the information for identifying the object may include at least one of the coordinate range of the object, the device unique information of the object, the installation area of the device 11 of the object, and information indicating any of windows displayed on the display screen.

The storage unit 176 stores historical data of the object viewed by the subject in association with each of a plurality of situations having occurred in a scene in response to the occurrence of the situation. In the storage mode, the storage unit 176 may store the data supplied from the input and output control unit 175 as the historical data. The storage unit 176 may store a plurality of objects together with a detection order by the detection unit 172.

When any of the plurality of situations has occurred, the output unit 177 is configured to output information for identifying the object associated with the situation in the historical data supplied from the input and output control unit 175. The output unit 177 may output information for identifying a location of the object. The output unit 177 may sequentially output the information of the plurality of objects following the detection order by the detection unit 172. The output unit 177 may output the information for identifying the object by at least one of causing a display device mounted to the subject (for example, a head mounted display) to display the information for identifying the object, increasing a luminance of the display screen of the external apparatus such as the device 11 that is the object, and presenting the external apparatus such as the device 11 that is the object by a sound. The output unit 177 may be connected to the external apparatus in a wired or wireless manner to output the information for identifying the object. In addition, the output unit 177 may include a display screen, a speaker, or the like which is configured to output the above-described information.

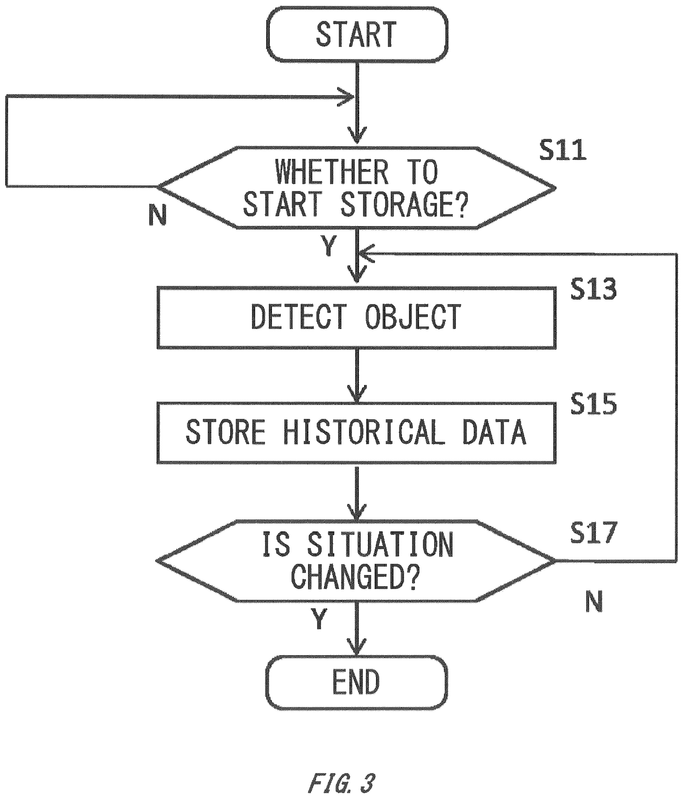

Fig. 3 illustrates an operation of the output apparatus 17. The output apparatus 17 is configured to assist maintenance and management of the plant by performing processing in steps S11 to S17. Steps S11 to S17 represent the operation in the storage mode of the output apparatus 17. It should be noted that this operation may be started in response to start of the plant.

In step S11, the output apparatus 17 determines whether a condition of storage start is satisfied. The output apparatus 17 may start a storage operation when a predetermined input is performed from the subject or the external apparatus via the acquisition unit 173. The predetermined input may include at least one of an input of a specific situation, an input of a specific scene, an input of identification information of the subject, and an input for setting the storage mode. In addition, when the time reaches a predetermined clock time or the second detection unit 174 detects a situation change, the output apparatus 17 may start the storage operation. When the condition of the storage start is satisfied (step S11; Y), the processing may shift to step S13. When the condition of the storage start is not satisfied (step S11; N), the flow may wait until the above-described condition is satisfied.

In step S13, the detection unit 172 detects the object viewed by the subject from the data supplied from the image capturing unit 171. A plurality of objects expected to be detected (as one example, the coordinate range, the device unique information, and the like) may be prestored, and the detection unit 172 may detect the object when the object is viewed by the subject. The plurality of objects expected to be detected may be prestored by the detection unit 172 for each of scenes. When the coordinate range indicated by the data supplied from the image capturing unit 171 is matched with at least a part of the objects expected to be detected, the detection unit 172 may detect the above-described object expected to be detected as the object viewed by the subject. The detection unit 172 may detect an area or the device 11 viewed by the subject for a period of time beyond a predetermined period (for example, one second) as the object.

In step S15, the input and output control unit 175 causes the storage unit 176 to store the detected object in association with the current situation in the current scene as the historical data. The input and output control unit 175 may further store at least one of the identification information of the subject and the detection order of the objects in association with the historical data. When a selection for deleting any of the plurality of objects in the historical data is received from the subject via the acquisition unit 173, the input and output control unit 175 may delete the selected object from the historical data of the storage unit 176.

In step S17, the second detection unit 174 detects whether the situation has changed. The second detection unit 174 may receive various types of data from the external apparatus of the plant via the acquisition unit 173, and detect the situation change in accordance with the data. The second detection unit 174 may detect the situation change by using different measurement values and/or different thresholds in accordance with the scene or the situation. As one example, in a situation where a temperature sensor in the plant indicates an abnormal value, the second detection unit 174 may detect that the situation has changed when a measured temperature from the temperature sensor is set to be in a normal range. In addition, when a signal indicating operation completion is received from the external apparatus such as the interface apparatus 16 via the acquisition unit 173, the second detection unit 174 may detect that the situation has changed. In addition, when the time is past the predetermined clock time or past the predetermined period of time, the second detection unit 174 may detect that the situation has changed.

When the second detection unit 174 detects the situation change (step S17; Y), the storage mode may ends. When the second detection unit 174 does not detect the situation change (step S17; N), the storage mode may continue by detecting the object until the above-described condition is satisfied. It should be noted that when a new situation or scene is detected by the second detection unit 174, the output apparatus 17 may start the storage mode with regard to the new situation or scene from step S13.

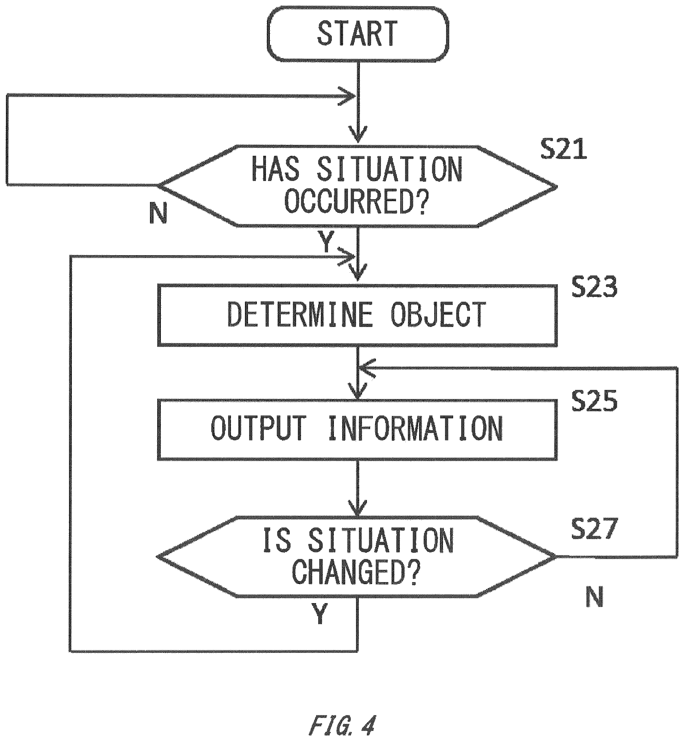

Fig. 4 illustrates another operation of the output apparatus 17. The output apparatus 17 is configured to assist the maintenance and management of the plant by performing processing in steps S21 to S27. Steps S21 to S27 represent the operation in the output mode of the output apparatus 17. It should be noted that this operation may be started in response to start of the plant. Herein, the subject in the processing in steps S21 to S27 may be different from the subject in the processing in steps S11 to S17 of the storage mode.

In step S21, the second detection unit 174 detects whether a situation has occurred. The second detection unit 174 may detect the occurrence of the situation similarly as in step S 15. As one example, when a measurement value of the temperature sensor in the plant exceeds a threshold, the second detection unit 174 may detect that a specific situation has occurred. In addition, when a signal indicating operation start is received from the external apparatus such as the interface apparatus 16 via the acquisition unit 173, the second detection unit 174 may detect that the situation has occurred. In addition, when an input indicating a situation of predetermined operation start is received from the subject via the acquisition unit 173, the second detection unit 174 may detect that the situation has occurred.

In step S23, the input and output control unit 175 determines a plurality of objects in accordance with the situation detected by the second detection unit 174, and acquires data indicating the objects and the detection order from the historical data of the storage unit 176. The input and output control unit 175 supplies the acquired data to the output unit 177.

In step S25, the output unit 177 outputs the information for identifying the plurality of objects in the detection order. After the information indicating the single object is output, when the second detection unit 174 receives an input indicating completion of the work corresponding to the above-described object from the subject or the external apparatus, the output unit 177 may output the information indicating the next object in the detection order. As one example, the output unit 177 may display a name of the device 11 that is the object, an installation area, or the like on a head mounted display attached to the subject. In addition, as one example, the output unit 177 may output control information for increasing a luminance of a window of the object, increasing a size of the window of the object, changing a color of the window of the object, or the like on the display screen of the device 11 that is the object.

In step S27, the second detection unit 174 may detect the situation change similarly as in step S15. When the second detection unit 174 has detected the situation change (step S27; Y), the input and output control unit 175 may determine the object in accordance with a situation after the change. When the second detection unit 174 does not detect the situation change (step S27; N), the flow returns to step S25, and the information may be output until the situation changes. It should be noted that when the situation after the change which is detected by the second detection unit 174 does not fall under an output condition (for example, when the situation is set to be in a normal range), the output apparatus 17 may end the output mode.

In accordance with the output apparatus 17 described above, an operation and the like of a skilled person can be stored, and an unskilled person can efficiently take over the operation and the like in the same manner as the skilled person.

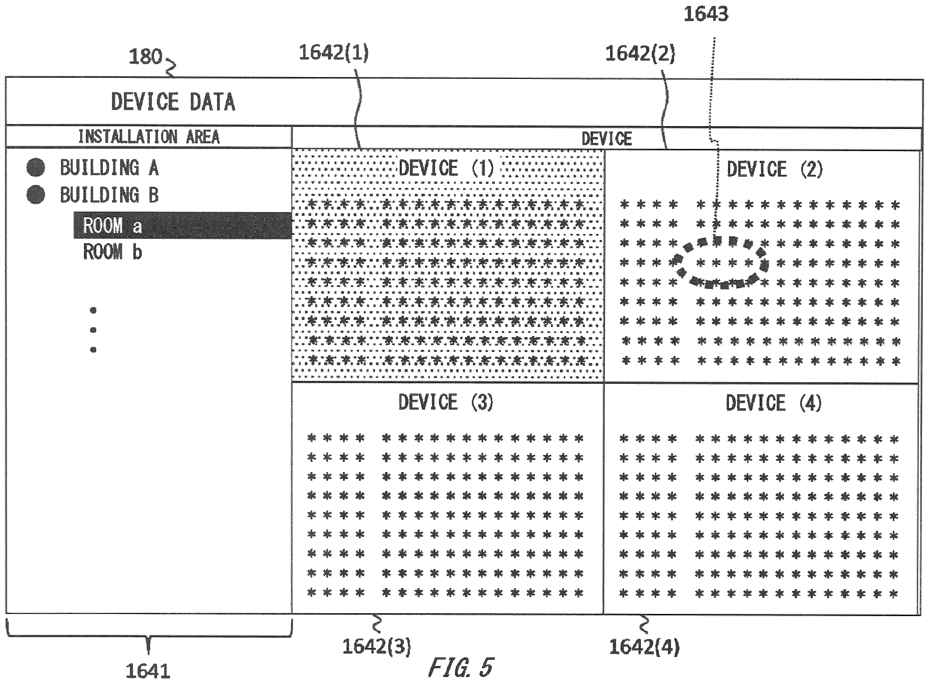

Fig. 5 illustrates a display screen 180 that is one example of the object in the output mode. The display screen 180 may be the display screen of the output apparatus 17 or the display screen of the external apparatus in the plant. In this case, the image capturing unit 171 may be provided in an end section of the display screen 180 and capture the eyes or the like of the subject who is viewing the display screen 180 for detecting the line of sight.

A process value of the device 11 that is a part selected by the subject among the respective devices 11 in the plant may be displayed on the display screen 180. For example, a selection area 1641 for selecting the installation area of the devices 11 in the plant and a data display area 1642 for displaying the process value of each of the devices 11 belonging to the selected installation area may be provided in the display screen 180. When an abnormality occurs in the process value of any of the devices 11 and the output apparatus 17 determines that the situation has occurred, the output unit 177 may change a display mode of data display area 1642 of the above-described process value.

In this drawing, as one example, buildings and rooms in the plant are displayed in the selection area 1641 as options of the installation area of the devices 11, a "room a" in a "building B" is selected, and histories of process values of a "device (1)" to a "device (4)" installed in the installation area are displayed in data display areas 1642 (1) to 1642 (4). In addition, when an abnormality occurs in the process value of the "device (1)" and the data display area 1642 (1) is the object to be viewed, a background color of the data display area 1642 (1) is changed by the control of the output unit 177. In addition, since it is detected that the line of sight of the subject is on the area 1643, it is determined that the situation is not changed, and the output apparatus 17 continues the change of the background color of the data display area 1642 (1).

It should be noted that according to the present embodiment, the output apparatus 17 executes the output mode and the storage mode at different timings for different subjects, but may execute the output mode and the storage mode in parallel for the same subject. As one example, when it is detected that the subject has viewed a new object that is not stored in the storage unit 176 in the output mode, the output apparatus 17 may store the new object in the storage mode.

In addition, the image capturing unit 171 may be attached to the subject (for example, the head, shoulder, or the like) and capture a direction in which the subject faces. For example, the image capturing unit 171 may capture a code attached to the device 11 (as one example, a barcode or a QR code (registered trademark) or the like, the detection unit 172 may recognize the device 11 by the code, and the input and output control unit 175 may cause the storage unit 176 to store the device 11 as the object.

In addition, a configuration may be adopted where the output apparatus 17 does not have the image capturing unit 171, and in this case, the detection unit 172 may receive the data for detecting the line of sight of the subject from an external device (for example, a wearable device, a camera, or the like).

In addition, the output apparatus 17 may be a part of the device 11 of the plant, the resource management apparatus 18, the interface apparatus 16, the operation control apparatus 15, or the terminal device 12 for maintenance.

Various embodiments of the present invention may be described with reference to flowcharts and block diagrams whose blocks may represent (1) steps of processes in which operations are performed or (2) sections of devices responsible for performing operations. Certain steps and sections may be implemented by a dedicated circuit, programmable circuitry supplied with computer readable instructions stored on computer readable media, and/or processors supplied with computer readable instructions stored on computer readable media. A dedicated circuit may include digital and/or analog hardware circuits and may include integrated circuits (IC) and/or discrete circuits. Programmable circuitry may include reconfigurable hardware circuits including logical AND, OR, XOR, NAND, NOR, and other logical operations, flip-flops, registers, memory elements, etc., such as field-programmable gate arrays (FPGA), programmable logic arrays (PLA), etc.

Computer readable media may include any tangible device that can store instructions for execution by a suitable device, such that the computer readable medium having instructions stored therein comprises an article of manufacture including instructions which can be executed to create means for performing operations specified in the flowcharts or block diagrams. Examples of computer readable media may include an electronic storage medium, a magnetic storage medium, an optical storage medium, an electromagnetic storage medium, a semiconductor storage medium, etc. More specific examples of computer readable media may include a floppy (registered trademark) disk, a diskette, a hard disk, a random access memory (RAM), a read only memory (ROM), an erasable programmable read only memory (EPROM or Flash memory), an electrically erasable programmable read only memory (EEPROM), a static random access memory (SRAM), a compact disc read only memory (CD-ROM), a digital versatile disk (DVD), a BLU-RAY (registered trademark) disc, a memory stick, an integrated circuit card, etc.

Computer readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer readable instructions may be provided to a processor of a general purpose computer, special purpose computer, or other programmable data processing device, or to programmable circuitry, locally or via a local area network (LAN), wide area network (WAN) such as the Internet, etc., to execute the computer readable instructions to create means for performing operations specified in the flowcharts or block diagrams. Examples of processors include computer processors, processing units, microprocessors, digital signal processors, controllers, microcontrollers, etc.

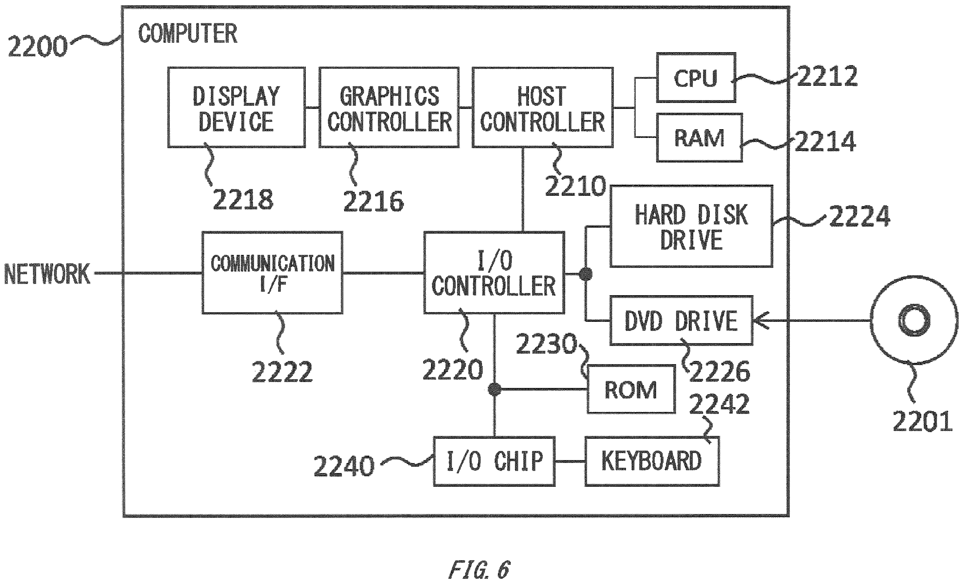

Fig. 6 illustrates an example of a computer 2200 through which a plurality of aspects of the present invention may be entirely or partially embodied. A program that is installed in the computer 2200 can cause the computer 2200 to function as or perform operations associated with apparatuses of the embodiments of the present invention or one or more sections thereof, or perform the operations or the one or more sections, and/or cause the computer 2200 to perform processes of the embodiments of the present invention or steps of the processes. Such a program may be executed by the CPU 2212 to cause the computer 2200 to perform certain operations associated with some or all of the blocks of flowcharts and block diagrams described herein.

The computer 2200 according to the present embodiment includes a CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, or the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and transmits the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on the computer 2200 or near the computer 2200. In addition, a recording medium such as a hard disk or a RAM provided in a server system connected to a dedicated communication network or the Internet can be used as the computer readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

- 1: maintenance and management system
- 11: device
- 12: terminal device for maintenance
- 15: operation control apparatus
- 16: interface apparatus
- 17: output apparatus
- 18: resource management apparatus
- 100: control network
- 171: image capturing unit
- 172: detection unit
- 173: acquisition unit
- 174: second detection unit
- 175: input and output control unit
- 176: storage unit
- 177: output unit
- 180: display screen
- 2200: computer
- 2201: DVD-ROM
- 2210: host controller
- 2212: CPU
- 2214: RAM
- 2216: graphics controller
- 2218: display device
- 2220: input/output controller
- 2222: communication interface
- 2224: hard disk drive
- 2226: DVD-ROM drive
- 2230: ROM
- 2240: input/output chip
- 2242: keyboard

## Claims

1. An apparatus comprising:
a detection unit configured to detect an object viewed by a subject;
a storage unit configured to store historical data of the object viewed by the subject in association with each of a plurality of situations having occurred in a scene in response to the occurrence of the situation; and
an output unit configured to output, when any of the plurality of situations has occurred, information for identifying the object associated with the situation in the historical data.

2. The apparatus according to claim 1, wherein:
the detection unit is configured to detect an object viewed by one subject; and
the output unit is configured to output information to another subject.

3. The apparatus according to claim 1 or 2, wherein:
the storage unit is configured to store a plurality of objects together with a detection order by the detection unit; and
the output unit is configured to sequentially output the information of the plurality of objects following the detection order by the detection unit.

4. The apparatus according to any one of claims 1 to 3, comprising:
a second detection unit configured to detect a change of a situation in the scene, wherein
the second detection unit is configured to detect the change of the situation in the scene in response to at least one of an operation performed on a device that is the object, and a change of a measurement value by a sensor beyond a threshold.

5. The apparatus according to any one of claims 1 to 4, wherein
the output unit is configured to output the information for identifying the object by at least one of causing a display device mounted to the subject to display the information for identifying the object, increasing a luminance of a display screen of the device that is the object, and presenting the device that is the object by a sound.

6. The apparatus according to any one of claims 1 to 5, wherein
the output unit is configured to output information for identifying a location of the object.

7. A method comprising:
detecting an object viewed by a subject;
storing historical data of the object viewed by the subject in association with each of a plurality of situations having occurred in a scene in response to the occurrence of the situation; and
outputting, when any of the plurality of situations has occurred, information for identifying the object associated with the situation in the historical data.

8. A program that causes a computer to function as:
a detection unit configured to detect an object viewed by a subject;
a storage unit configured to store historical data of the object viewed by the subject in association with each of a plurality of situations having occurred in a scene in response to the occurrence of the situation; and
an output unit configured to output, when any of the plurality of situations has occurred, information for identifying the object associated with the situation in the historical data.

9. A recording medium which stores the program according to claim 8.
